# EUROPEAN PATENT APPLICATION

(11) **EP 2 639 617 A1**
(43) Date of publication of application: **18.09.2013**
(21) Application number: 13001341.0
(22) Date of filing: 15.03.2013
(51) Int. Cl.: G02B 21/36

(54) **Microscope system and device driving method**

(30) Priority: 15.03.2012 JP 2012058620; 06.03.2013 JP 2013044747
(71) Applicant: Olympus Corporation, Tokyo 151-0072 (JP)
(72) Inventor: Komuro, Toshiya, Tokyo 151-0072 (JP)
(74) Representative: Gunzelmann, Rainer

(57) **Abstract**

A microscope system (1) includes actuators (29 to 33) configured to cause components of a microscope (2) to operate, a plurality of power drivers (79a to 79e) configured to drive the actuators, respectively, an actuator controller (73) configured to control the actuators through the power drivers, and a control management unit (72) configured to control the actuator controller (73) to designate any one of the power drivers (79a to 79e) to output a start signal for allowing the designated power driver to start operation to the designated power driver, and to control the actuator controller (73) to stop outputting of the start signal to the designated power driver and the other power drivers other than the designated power driver until passage of a settling time in which driving of one of the actuators in response to the operation of the designated power driver is completed and then enabled again.

## Description

### TECHNICAL FIELD

The disclosure relates to a microscope system which images a sample to acquire a sample image, a driving method of the microscope system, and a program.

### BACKGROUND ART

Recently, in many microscope systems, observation and imaging have been performed on a sample specimen while switching different wavelengths at a high speed. As a microscope system having such functions, for example, a microscope system is disclosed where a sample specimen is observed by sequentially driving a plurality of electrically-operated apparatuses such as a filter wheel which can switch filters for transmitting light having different wavelengths at a high speed and a shutter which can switch an exposed state of an illumination apparatus for emitting an illumination light or a stimulation light while controlling the electrically-operated apparatuses based on a predetermined operation schedule and time according to the operation schedule by using a host system (refer to Japanese Laid-open Patent Publication No. 2007-25074).

However, in the microscope system disclosed in Japanese Laid-open Patent Publication No. 2007-25074, when driving the plurality of electrically-operated apparatuses, since the host system controls driving of each electrically-operated apparatus, delay occurs in transmitting a driving signal to each electrically-operated apparatus, so that the microscope system is not suitable for observation of speedily-changing phenomena of the sample specimen.

In addition, when driving each electrically-operated apparatus at a high speed, since a settling time or an imaging timing of the sample specimen suitable for each electrically-operated apparatus is different, it is difficult to control each electrically-operated apparatus while driving the electrically-operated apparatus continuously in terms of time.

Accordingly, there is a need to provide a microscope system capable of driving a plurality of electrically-operated apparatuses at a high speed at appropriate timing, a driving method of the microscope system, and a program.

### SUMMARY

In accordance with some embodiments, a microscope system which images a sample to acquire a sample image, a driving method of the microscope system, and a program are presented.

In some embodiments, a microscope system includes: a plurality of actuators configured to cause components of a microscope to operate; a plurality of power drivers configured to drive the plurality of actuators, respectively; an actuator controller configured to control the plurality of actuators through the plurality of power drivers; and a control management unit configured to control the actuator controller to designate any one of the plurality of power drivers to output a start signal for allowing the designated power driver to start operation to the designated power driver, and to control the actuator controller to stop outputting of the start signal to the designated power driver and the other power drivers other than the designated power driver until passage of a settling time in which driving of one of the plurality of actuators in response to the operation of the designated power driver is completed and then enabled again.

In some embodiments, a method of driving a microscope system is presented. The microscope system includes a plurality of actuators configured to cause components of a microscope to operate; a plurality of power drivers configured to drive the plurality of actuators, respectively; and an actuator controller configured to control the plurality of actuators through the plurality of power drivers. The method includes: controlling the actuator controller to designate any one of the plurality of power drivers to output a start signal for allowing the designated power driver to start operation to the designated power driver; and controlling the actuator controller to stop outputting of the start signal to the designated power driver and the other power drivers other than the designated power driver until passage of a settling time in which driving of one of the plurality of actuators in response to the operation of the designated power driver is completed and then enabled again.

In some embodiments, a program is executed by a microscope system that includes a plurality of actuators configured to cause components of a microscope to operate; a plurality of power drivers configured to drive the plurality of actuators, respectively; and an actuator controller configured to control the plurality of actuators through the plurality of power drivers. The program causes the microscopic system to execute: controlling the actuator controller to designate any one of the plurality of power drivers to output a start signal for allowing the designated power driver to start operation to the designated power driver; and controlling the actuator controller to stop outputting of the start signal to the designated power driver and the other power drivers other than the designated power driver until passage of a settling time in which driving of one of the plurality of actuators in response to the operation of the designated power driver is completed and then enabled again.

The above and other features, advantages and technical and industrial significance of this invention will be better understood by reading the following detailed description of presently preferred embodiments of the invention, when considered in connection with the accompanying drawings.

### BRIEF DESCRIPTION OF DRAWINGS

FIG. 1 is a schematic diagram illustrating a whole configuration of a microscope system according to an embodiment of the present invention;
FIG. 2 is a block diagram illustrating a configuration of a shutter/filter-wheel controller illustrated in FIG. 1;
FIG. 3 is a flowchart illustrating an overview of processes performed by the microscope system according to the embodiment of the present invention;
FIG. 4 is a flowchart illustrating an overview of a time-lapse process illustrated in FIG. 3;
FIG. 5 is a timing chart illustrating operations of components under the control of the shutter/filter-wheel controller of the microscope system according to the embodiment of the present invention;
FIG. 6A is a timing chart illustrating operations of components under the control of a shutter/filter-wheel controller of a microscope system according to Modified Example 4 of the embodiment of the present invention;
FIG. 6B is a timing chart illustrating operations of components under the control of the shutter/filter-wheel controller of the microscope system according to Modified Example 4 of the embodiment of the present invention;
FIG. 7 is a timing chart illustrating operations of components under the control of a shutter/filter-wheel controller of a microscope system according to Modified Example 5 of the embodiment of the present invention;
FIG. 8 is a timing chart illustrating operations of components under the control of a shutter/filter-wheel controller of a microscope system according to Modified Example 6 of the embodiment of the present invention;
FIG. 9 is a timing chart illustrating operations of components under the control of a shutter/filter-wheel controller of a microscope system according to Modified Example 7 of the embodiment of the present invention; and
FIG. 10 is a timing chart illustrating operations of components under the control of a shutter/filter-wheel controller of a microscope system according to Modified Example 8 of the embodiment of the present invention.

### DESCRIPTION OF EMBODIMENTS

Exemplary embodiments will be described with reference to the accompanying drawings. The present invention is not limited to the following embodiments. In the drawings, the same reference numerals are used to indicate the same or similar parts.

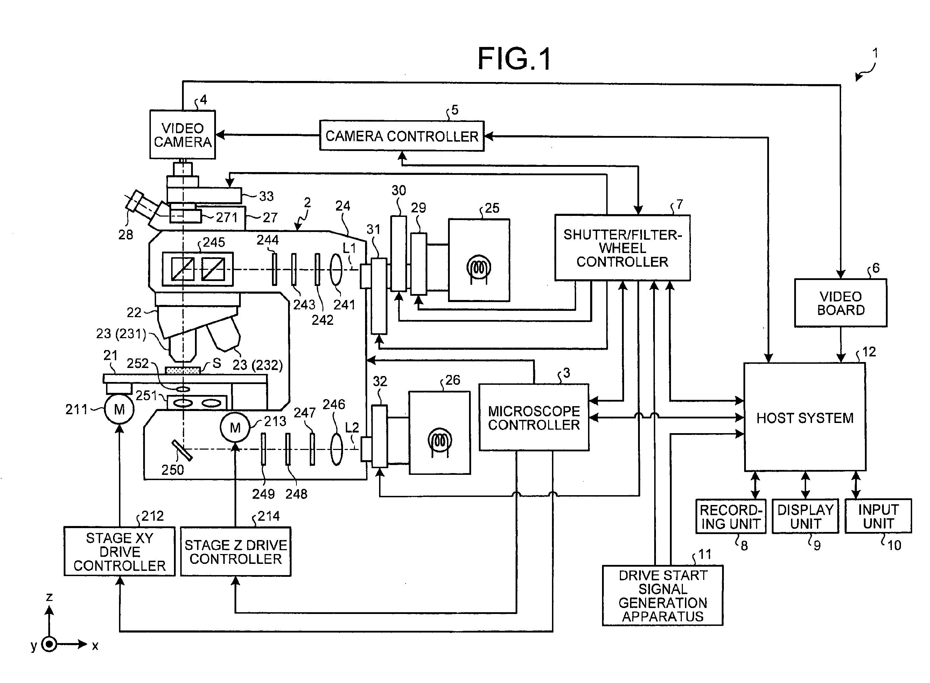

FIG. 1 is a schematic diagram illustrating a whole configuration of a microscope system according to an embodiment of the present invention. In FIG. 1, the plane on which a microscope system 1 is mounted is defined as an XY plane, and the direction perpendicular to the XY plane is defined as a Z direction.

As illustrated in FIG. 1, the microscope system 1 is configured to include a microscope apparatus 2 which observes a sample specimen S, a microscope controller 3 which controls driving of the microscope apparatus 2, a video camera 4 which images the sample specimen S through the microscope apparatus 2 to generate image data of the sample specimen S, a camera controller 5 which controls driving of the video camera 4, a video board 6 which performs a specified image process on the image data generated by the video camera 4, a shutter/filter-wheel controller 7 which controls a shutter and a filter wheel of the microscope apparatus 2, a recording unit 8 where various programs executed in the microscope system 1, control parameters, and the image data imaged by the video camera 4 are recorded, a display unit 9 which displays images corresponding to the image data, an input unit 10 which receives various kinds of manipulation information of the microscope system 1 as input, a drive start signal generation apparatus 11 which generates a drive start signal of allowing driving of each of components of the microscope system 1 to be started, and a host system 12 which controls the components of the microscope system 1. The microscope apparatus 2, the microscope controller 3, the video camera 4, the camera controller 5, the video board 6, the shutter/filter-wheel controller 7, the recording unit 8, the display unit 9, the input unit 10, the drive start signal generation apparatus 11, and the host system 12 are connected to each other in a wired or wireless manner so as to communicate data with each other.

The microscope apparatus 2 is configured to include an electrically-driven stage 21 on which the sample specimen S is mounted, a microscope body unit 24 which is substantially C-shaped to support the electrically-driven stage 21 and to hold an objective lens 23 through a revolver 22, an incident-light source 25 which is installed at the upper rear side of the microscope body unit 24 (right side in FIG. 1), a transmitted-light source 26 which is installed at the lower rear side of the microscope body unit 24 (right side in FIG. 1), a lens barrel 27 which is mounted on the upper side of the microscope body unit 24, and a binocular unit 28 which is detachably attached to the lens barrel 27. The incident-light source 25 is connected to the microscope body unit 24 through an incident-light source shutter 29, an ND filter wheel 30, and an excitation light source filter wheel 31. In addition, the transmitted-light source 26 is connected to the microscope body unit 24 through a transmitted-light source shutter 32. In addition, the video camera 4 which images a specimen image of the sample specimen S is detachably attached to the lens barrel 27 through an observation absorption filter wheel 33.

The electrically-driven stage 21 is configured to be movable in XYZ directions. More specifically, the electrically-driven stage 21 is configured to be movable in the XY plane by a motor 211 and a stage XY drive controller 212 which controls driving of the motor 211. In the stage XY drive controller 212, under the control of the microscope controller 3, a specified origin position of the electrically-driven stage 21 on the XY plane is detected by an XY-position origin sensor (not illustrated), and an observation position on the sample specimen S is moved by controlling a driving amount of the motor 211 by using the origin position as a starting point. The stage XY drive controller 212 outputs the X position and Y position of the electrically-driven stage 21 during the observation to the microscope controller 3 in unit of a specified time interval. In addition, the electrically-driven stage 21 is configured to be movable in the Z direction by a motor 213 and a stage Z drive controller 214 which controls driving of the motor 213. In the stage Z drive controller 214, under the control of the microscope controller 3, a specified origin position of the electrically-driven stage 21 in the Z direction is detected by a Z-position origin sensor (not illustrated), and the sample specimen S is moved so as to adjust the focus to an arbitrary Z position in a specified height range by controlling a driving amount of the motor 213 by using the origin position as a starting point. The stage Z drive controller 214 outputs the Z position of the electrically-driven stage 21 during the observation to the microscope controller 3 in unit of a specified time interval.

The revolver 22 is rotatably retained with respect to the microscope body unit 24 and allows the objective lens 23 to be disposed above the sample specimen S. The revolver 22 includes a nose piece, a swing revolver, or the like. The revolver 22 holds a plurality of the objective lenses 23 having different magnifications (observation magnifications). The revolver 22 is inserted into an optical path of an observation light beam to selectively switch the objective lens 23 which is used for the observation of the sample specimen S.

The objective lenses 23 of at least one of objective lenses 231 (hereinafter, referred to as "low-magnification objective lenses 231") having relatively low magnifications of, for example, x10, x20, and x40 and at least one of objective lenses 232 (hereinafter, referred to as "high-magnification objective lens 232") having higher magnification than the magnifications x10, x20, and x40 of the low-magnification objective lenses 231 are attached to the revolver 22. The magnification of the low-magnification objective lens 231 and the magnification of the high-magnification objective lens 232 are exemplary ones. It is sufficient that the magnification of the high-magnification objective lens 232 be higher than that of the low-magnification objective lens 231.

In the upper portion of the microscope body unit 24, an incident-light illumination optical system L1 for performing incident-light illumination on the sample specimen S is installed therein. The incident-light illumination optical system L1 is configured by arranging a collector lens 241 which condenses an illumination light beam emitted from an incident-light source 25, an illumination-system filter unit 242, a field stop 243, an aperture diaphragm 244, an mirror unit 245 which changes an optical path of the illumination light beam according to an optical axis of the objective lens 23, and the like at appropriate positions along the optical path of the illumination light beam. The incident-light source 25 is connected to the microscope body unit 24 through the incident-light source shutter 29, the ND filter wheel 30, and the excitation light source filter wheel 31. The illumination light beam emitted from the incident-light source 25 is illuminated on the sample specimen S through the incident-light source shutter 29, the ND filter wheel 30, the excitation light source filter wheel 31, the incident-light illumination optical system L1, and the objective lens 23. A reflected light beam (hereinafter, referred to as an "observation light beam") reflected by the sample specimen S is incident on the video camera 4 and the binocular unit 28 through the objective lens 23, the mirror unit 245, and the lens barrel 27.

In addition, in the lower portion of the microscope body unit 24, a transmitted-light illumination optical system L2 for performing transmitted-light illumination on the sample specimen S is installed therein. The transmitted-light illumination optical system L2 is configured by arranging a collector lens 246 which condenses an illumination light beam emitted from a transmitted-light source 26, an illumination-system filter unit 247, a field stop 248, an aperture diaphragm 249, a curved mirror 250 which changes an optical path of the illumination light beam according to the optical axis of the objective lens 23, a condenser optical element unit 251, a top lens unit 252, and the like at appropriate positions along the optical path of the illumination light beam. The transmitted-light source 26 is connected to the microscope body unit 24 through a transmitted-light source shutter 32. The illumination light beam emitted from the transmitted-light source 26 is illuminated on the sample specimen S by the transmitted-light illumination optical system L2 and is incident as the observation light beam through the objective lens 23, the mirror unit 245, and the lens barrel 27 on the video camera 4 and the binocular unit 28.

The incident-light source 25 and the transmitted-light source 26 include, for example, a halogen lamp, a xenon lamp, a white LED, or the like.

In the lens barrel 27, an beam splitter 271 which changes the optical path of the observation light beam, which passes through the mirror unit 245, to guide the observation light beam to the binocular unit 28 or the video camera 4 is installed therein. Due to the beam splitter 271, the specimen image of the sample specimen S is extracted into the binocular unit 28 to be observed through the ocular lens by observer's eyes, or the specimen image of the sample specimen S is imaged through the observation absorption filter wheel 33 by the video camera 4.

Under the control of the shutter/filter-wheel controller 7, the incident-light source shutter 29 sets the state of the illumination light beam, which is illuminated on the sample specimen S from the incident-light source 25, to an exposed state or a blocked state.

The ND filter wheel 30 is configured to include a plurality of ND filters which sense the illumination light beam emitted from the incident-light source 25. Under the control of the shutter/filter-wheel controller 7, the ND filter wheel 30 rotates the ND filters so as to be aligned on the optical path of the illumination light beam emitted from the incident-light source 25.

The excitation light source filter wheel 31 is configured with a rotation-type filter wheel where a plurality of attachment holes for allowing optical filters to be attached thereto are formed, and excitation wavelength filters which transmits light beams having respective wavelengths (light beams having different excitation wavelengths) are attached to the attachment holes. Under the control of the shutter/filter-wheel controller 7, the excitation light source filter wheel 31 rotates the optical filters so as to be aligned on the optical path of the illumination light beam emitted from the incident-light source 25.

Under the control of the shutter/filter-wheel controller 7, the transmitted-light source shutter 32 sets the state of the illumination light beam, which is illuminated on the sample specimen S from the transmitted-light source 26, to an exposed state or a blocked state.

The observation absorption filter wheel 33 is configured with a rotation-type filter wheel where a plurality of attachment holes for allowing optical filters to be attached thereto are formed, and optical filters having different spectral transmittance characteristics are attached to the attachment holes. Under the control of the shutter/filter-wheel controller 7, the observation absorption filter wheel 33 rotates the optical filters so as to be aligned on the optical path of the illumination light beam emitted from the incident-light source 25.

The microscope controller 3 includes a CPU (Central Processing Unit) and semiconductor memory such as flash memory and RAM (Random Access Memory). Under the control of the host system 12, the microscope controller 3 collectively controls operations of components constituting the microscope apparatus 2. More specifically, the microscope controller 3 performs a switching process for switching the objective lens 23 arranged on the optical path of the observation light beam by rotating the revolver 22, a driving process of driving the electrically-driven stage 21 by driving the motor 211 or the motor 213 through the stage XY drive controller 212 or the stage Z drive controller 214, and an adjusting process of adjusting the components of the microscope apparatus 2 according to the observation of the sample specimen S. In addition, the microscope controller 3 outputs the states of the components of the microscope apparatus, for example, position information (XY position and Z position) of the electrically-driven stage 21 and type information of the objective lens 23 attached to the revolver 22 to the host system 12.

The video camera 4 includes an imaging device such as a CCD (Charge Coupled Device) or a CMOS (Complementary Metal Oxide Semiconductor). Under the control of the camera controller 5, the video camera 4 captures an observation image of the sample specimen S incident through the optical filter of the lens barrel 27 and the observation absorption filter wheel 33 and outputs the captured image data of the sample specimen S to the video board 6 through a camera cable.

The camera controller 5 includes a CPU and semiconductor memory such as flash memory and RAM (Random Access Memory). The camera controller 5 controls operations of the video camera 4. More specifically, under the control of the shutter/filter-wheel controller 7 or the host system 12, the camera controller 5 performs an ON/OFF switching process of automatic gain control of the video camera 4, a gain setting process, an AE process, and a setting process for the AF process and a frame rate to control the imaging operations of the video camera 4. When the camera controller 5 receives a random trigger from the shutter/filter-wheel controller 7, the camera controller 5 allows the video camera 4 to start imaging the sample specimen S.

In the video board 6, an image processing unit installed therein performs a specified image process on the image data (image signals) output from the video camera 4 and outputs the resulting data to the host system 12. More specifically, the video board 6 performs image processes including an optical black subtraction process, a white balance adjustment process, a synchronization process, a color matrix calculation process, a y correction process, a color reproduction process, an edge highlighting process, and the like on the image data.

The shutter/filter-wheel controller 7 controls actuators of the incident-light source shutter 29, the ND filter wheel 30, the excitation light source filter wheel 31, the transmitted-light source shutter 32, the observation absorption filter wheel 33, the camera controller 5, and the like. The detailed configuration of the shutter/filter-wheel controller 7 will be described below.

The recording unit 8 includes a semiconductor memory such as ROM or RAM and a hard disk record. The recording unit 8 records the programs executed by the microscope system 1, various kinds of parameters, the image data output through the host system 12 from the video board 6, and the states of the components of the microscope apparatus 2 output from the microscope controller 3. In addition, the recording unit 8 may include a memory card or the like which is attached from an external side.

The display unit 9 includes a display panel such as a liquid crystal display panel or an organic EL (Electro Luminescence) display panel. The display unit 9 displays images corresponding to the image data output through the host system 12 from the video board 6. The display unit 9 displays various kinds of manipulation information of the microscope system 1.

The input unit 10 includes a manipulation input device such as a keyboard and a mouse to receive various kinds of manipulations of the microscope system 1 as input.

The drive start signal generation apparatus 11 includes a timing generator and the like to output a drive start signal (drive pulse) for driving each component of the microscope system 1 to the shutter/filter-wheel controller 7 and the host system 12 in unit of a specified time interval.

The host system 12 includes a CPU, semiconductor memory such as flash memory or RAM, and the like. The host system 12 performs transmission or the like of instructions or data corresponding to each component constituting the microscope system 1 according to an instruction signal from the input unit 10 to collectively control the operations of the microscope system 1. When the power is turned on, the host system 12 reads various programs and various parameters used for execution of the programs from the flash memory installed therein and executes the programs. The host system 12 outputs a control command through the microscope controller 3 to the shutter/filter-wheel controller 7 based on the instruction signal from the input unit 10. Here, the control command includes drive parameters and drive timings which the shutter/filter-wheel controller 7 uses to control the driving of the incident-light source shutter 29, the ND filter wheel 30, the excitation light source filter wheel 31, the transmitted-light source shutter 32, the observation absorption filter wheel 33, and the video camera 4. In addition, the drive parameter is a driving order of actuators. In addition, the drive timing includes a shutter standby time, a shutter settling time, and a filter wheel settling time.

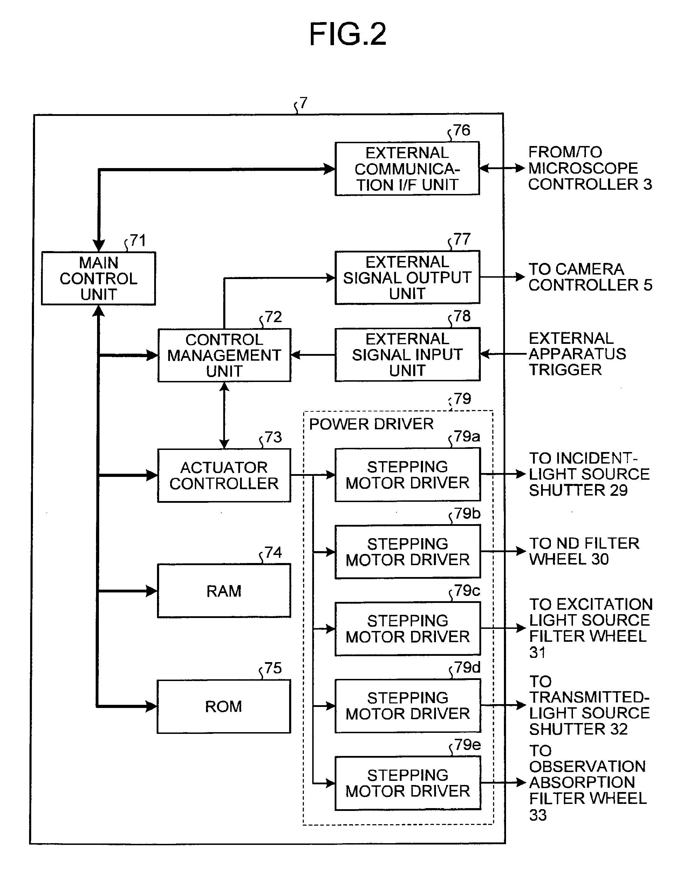

Now, the configuration of the shutter/filter-wheel controller 7 illustrated in FIG. 1 will be described in detail. FIG. 2 is a block diagram illustrating the configuration of the shutter/filter-wheel controller 7.

As illustrated in FIG. 2, the shutter/filter-wheel controller 7 is configured to include a main control unit 71, a control management unit 72, an actuator controller 73, a RAM 74, a ROM 75, an external communication I/F unit 76, an external signal output unit 77, an external signal input unit 78, and power driver 79 which drives a plurality of actuators.

The main control unit 71 includes a CPU and the like and connected to the control management unit 72, the actuator controller 73, the RAM 74, the ROM 75, and the external communication I/F unit 76 via a bus so as to communicate data in a bi-directional manner. The main control unit 71 performs transmission and the like of instructions or data corresponding to each component constituting the shutter/filter-wheel controller 7. More specifically, when the power of the microscope system 1 is turned on, the main control unit 71 reads a program out from the ROM 75 and develops necessary data on the RAM 74. In addition, the main control unit 71 transmits the drive parameters of the actuators and the setting values of stepping motor drivers 79a to 79e of the power driver 79 recorded in the ROM 75 to the control management unit 72 and the actuator controller 73 based on control commands input from the host system 12 through the external communication I/F unit 76.

In addition, when the main control unit 71 receives the drive start signals output from the drive start signal generation apparatus 11 through the control management unit 72 and the external signal input unit 78, the main control unit 71 sequentially drives the actuators in the order set in the control management unit 72 and the actuator controller 73 according to the control commands input from the host system 12 and the drive parameters of the actuators and the setting values of the stepping motor drivers 79a to 79e of the power driver 79 recorded in the ROM 75.

The control management unit 72 includes a programmable logic device and the like. Under the control of the main control unit 71, the control management unit 72 controls the actuator controller 73 to output a start signal for allowing any one of the stepping motor drivers 79a to 79e to start operations thereof to one power driver 79, and controls the actuator controller 73 to stop outputting of start signals to the designated power driver 79 and the other power drivers 79 until a settling time elapses. During the settling time, the driving of the actuator in response to the operation of the power driver 79 is ended and then the driving thereof is enabled again. More specifically, the control management unit 72 controls the actuator controller 73 to output a start signal for allowing a designated power driver (for example, the stepping motor driver 79a) to start operations thereof to the stepping motor driver 79a, and controls the actuator controller 73 to stop outputting of start signals to the designated stepping motor driver 79a and the other stepping motor drivers 79b to 79e until passage of the settling time during which the driving of the incident-light source shutter 29 in response to the operation of the stepping motor driver 79a is ended and then the driving thereof is enabled again.

In addition, when a standby time until the driving of a specified actuator is started and a settling time in which the driving of the other actuators is entirely completed elapse, the control management unit 72 starts driving of the specific actuator, and outputs the apparatus signal to the external apparatus at the time that the driving of the specified actuator is completed. More specifically, when a shutter standby time included in the control command output through the microscope controller 3 from the host system 12 elapses and a driving completion time during which the driving of each of the incident-light source shutter 29, the ND filter wheel 30, the excitation light source filter wheel 31, the transmitted-light source shutter 32, and the observation absorption filter wheel 33 based on the drive parameters is entirely completed elapses, the control management unit 72 outputs the random trigger as an apparatus signal to the camera controller 5 through the external signal output unit 77.

In addition, when the control management unit 72 receives an external apparatus trigger which is an electrical signal output through the external signal input unit 78 from the drive start signal generation apparatus 11, the control management unit 72 starts counting of the shutter standby time and outputs the start signal to the actuator controller 73. More specifically, when the control management unit 72 receives the external apparatus trigger, the control management unit 72 performs the contents which are set to the corresponding actuator and starts counting of the shutter standby time. When the control management unit 72 receives a driving completion signal of the actuator from the actuator controller 73, the control management unit 72 performs the driving step for the next actuator.

Under the control of the control management unit 72, the actuator controller 73 outputs the start signal to the power driver 79 based on the drive parameter and the drive timing set by the main control unit 71. More specifically, the actuator controller 73 sequentially outputs the start signals to the stepping motor drivers 79a to 79e based on the drive parameter and the drive timing set by the main control unit 71.

Under the control of the host system 12, the microscope system 1 having the above-described configuration displays the image data of the sample specimen S captured by the video camera 4 on the display unit 9, so that the image of the sample specimen S can be provided to the observer. In addition, when the microscope system 1 performs time-lapse fluorescence observation on the sample specimen S, under the control of the shutter/filter-wheel controller 7, the microscope system 1 controls driving of the actuators so as to switch the operation processes at a high speed. For example, when the microscope system 1 performs time-lapse observation on a sample specimen S of a multiple-stained cell, the microscope system 1 performs imaging the stained sample specimen S for each color at a specified time interval. More specifically, when the microscope system 1 performs imaging of three-color fluorescence observation three times in unit of one hour, the microscope system 1 performs the two-times operations of imaging while sequentially switching filters and shutters for three colors and standing by for one hour and performs the operation of imaging while sequentially switching filters and shutters for three colors, so that the time-lapse observation is ended.

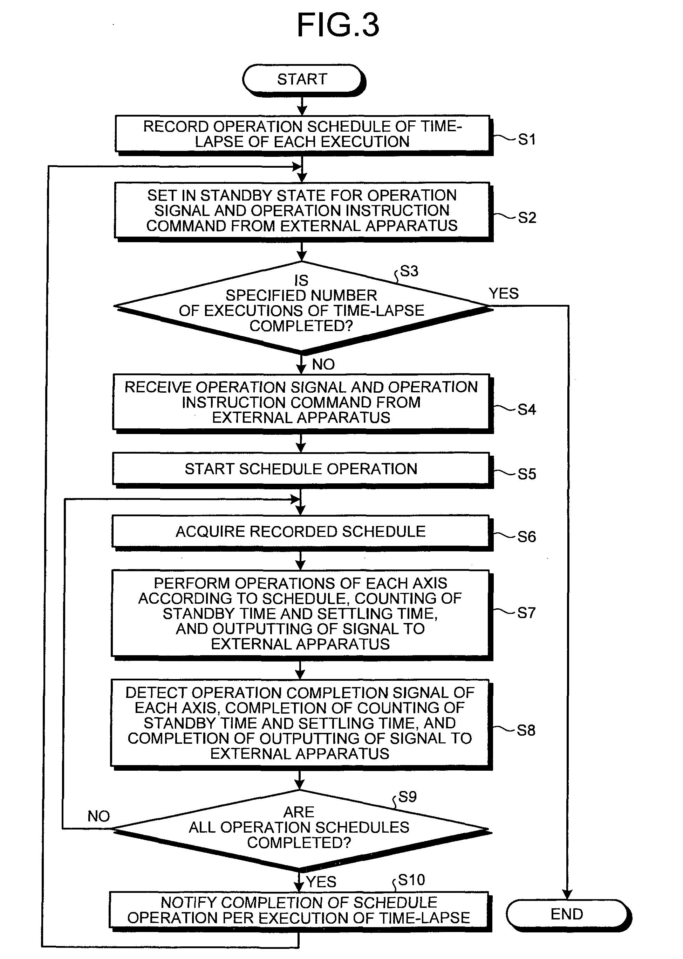

Next, the processes performed by the microscope system 1 will be described. FIG. 3 is a flowchart illustrating the overview of the processes performed by the microscope system 1. Steps S4 to S10 of FIG. 3 correspond to the time-lapse processes described below.

As illustrated in FIG. 3, the host system 12 records an operation schedule of the time-lapse of each execution set through the input unit 10 by the user in the microscope controller 3 and the shutter/filter-wheel controller 7 (Step S1). At this time, the host system 12 may record the operation schedule of the time-lapse of each execution set by the user in the recording unit 8.

Subsequently, the shutter/filter-wheel controller 7 is set in the standby state for an operation signal from the drive start signal generation apparatus 11 and an operation instruction command of the host system 12 (Step S2).

Next, the host system 12 determines whether or not the specified number of executions of the time-lapse set by the user is completed (Step S3). When the host system 12 determines that the specified number of executions of the time-lapse is completed (Yes in Step S3), the microscope system 1 ends the processes. On the contrary, when the host system 12 determines that the specified number of executions of the time-lapse is not completed (No in Step S3), the microscope system 1 proceeds to Step S4.

In Step S4, the shutter/filter-wheel controller 7 receives the operation signal from the drive start signal generation apparatus 11 and the operation instruction command through the microscope controller 3 from the host system 12.

Subsequently, the shutter/filter-wheel controller 7 starts a schedule operation (Step S5) and acquires a recorded schedule from the RAM 74 and the ROM 75 (Step S6).

Next, the shutter/filter-wheel controller 7 performs operations of each axis according to the schedule, counting of the standby time and the settling time, and outputting of the random trigger signal through the external signal output unit 77 with respect to the video camera 4, each filter wheel, and each shutter (Step S7).

Next, the shutter/filter-wheel controller 7 detects an operation completion signal of each axis, completion of the counting of the standby time, and completion of the counting of the settling time, and completion of the outputting of the random trigger signal from the external signal output unit 77 (Step S8).

Subsequently, the shutter/filter-wheel controller 7 determines whether or not all the operation schedules are completed (Step S9). When the shutter/filter-wheel controller 7 determines that all the operation schedules are completed (Yes in Step S9), the microscope system 1 proceeds to Step S10. On the contrary, when the shutter/filter-wheel controller 7 determines that all the operation schedules are not completed (No in Step S9), the microscope system 1 returns to Step S6.

Next, the shutter/filter-wheel controller 7 notifies the completion of the schedule operation per execution of the time lapse through the microscope controller 3 to the host system 12 (Step S10). After Step S10, the microscope system 1 returns to Step S2.

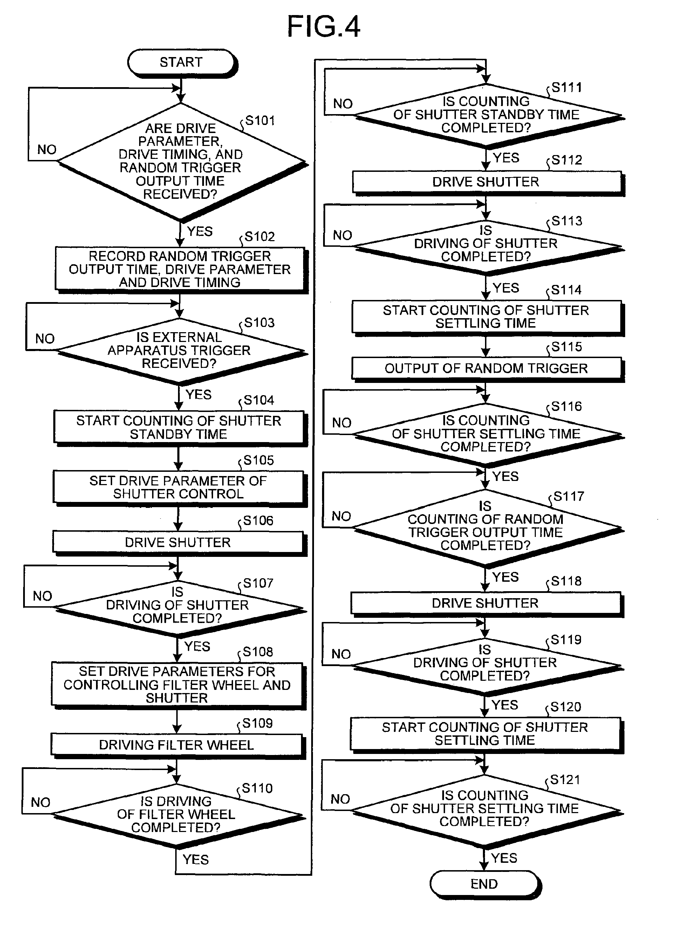

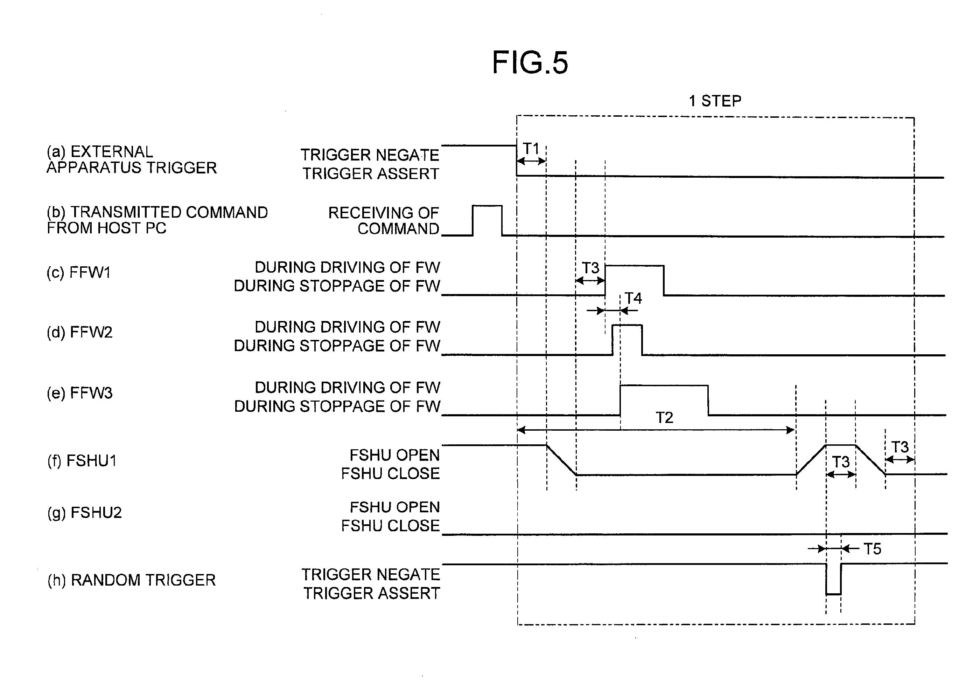

Next, the time-lapse processes corresponding to Steps S4 to S10 of FIG. 3 will be described in detail. FIG. 4 is a flowchart illustrating an overview of the time-lapse processes corresponding to Steps S4 to S10 of FIG. 3. FIG. 5 is a timing chart illustrating operations of the actuators under the control of the shutter/filter-wheel controller 7. A waveform (a) of FIG. 5 indicates input timing of inputting external apparatus triggers from the drive start signal generation apparatus 11 to the external signal input unit 78. A waveform (b) of FIG. 5 indicates input timing of inputting control commands through the microscope controller 3 from the host system 12. A waveform (c) of FIG. 5 indicates drive timing of the ND filter wheel 30. A waveform (d) of FIG. 5 indicates drive timing of the excitation light source filter wheel 31. A waveform (e) of FIG. 5 indicates drive timing of the observation absorption filter wheel 33. A waveform (f) of FIG. 5 indicates drive timing of the incident-light source shutter 29. A waveform (g) of FIG. 5 indicates drive timing of the transmitted-light source shutter 32. A waveform (h) of FIG. 5 indicates timing of outputting random triggers through the external signal output unit 77. Next, an example of one step performed by the microscope system 1 will be described hereinafter. Herein, one step performed by the microscope system 1 denotes a sequence of operations where driving of the filter wheel, opening of the shutter, outputting of random triggers (outputting of imaging triggers), and closing of the shutter are sequentially performed.

As illustrated in FIG. 4, the main control unit 71 determines whether or not the drive parameters and the drive timing (hereinafter, referred to "drive information") of the incident-light source shutter 29, the transmitted-light source shutter 32, the ND filter wheel 30, the excitation light source filter wheel 31, and the observation absorption filter wheel 33, which are transmitted through the microscope controller 3 from the host system 12, and a random trigger output time are received (Step S101). When the drive information is received (Yes in Step S101), the main control unit 71 proceeds to Step S102. On the other hand, if the drive information is not received (No in Step S101), the main control unit 71 maintains the standby state until the drive information is received.

Subsequently, the main control unit 71 records the received drive information and random trigger output time in the RAM 74 and the ROM 75 (Step S102).

Next, the control management unit 72 determines whether or not the external apparatus trigger (drive start signal) is received (asserted) through the external signal input unit 78 from the drive start signal generation apparatus 11 (Step S103). When the control management unit 72 determines that the external apparatus trigger is not received from the drive start signal generation apparatus 11 (No in Step S103), the shutter/filter-wheel controller 7 stands by until the external apparatus trigger is received. On the contrary, when the control management unit 72 determines that the external apparatus trigger is received from the drive start signal generation apparatus 11 (Yes in Step S103), the control management unit 72 starts counting the shutter standby time T2 (Step S104). More specifically, as illustrated in FIG. 5, when the control management unit 72 receives the external apparatus trigger through the external signal input unit 78 from the drive start signal generation apparatus 11, the control management unit 72 starts counting the shutter standby time T2.

Subsequently, the main control unit 71 transmits the drive parameter for controlling the shutter from the RAM 74 and the ROM 75 to the actuator controller 73 to set the drive parameters (Step S105).

Next, the control management unit 72 allows the actuator controller 73 to output the start signal so as to drive the shutter (Step S106). More specifically, as illustrated in FIG. 5, after a drive processing time T1 elapses, the actuator controller 73 outputs a start signal for starting operations to the stepping motor driver 79a and drives the incident-light source shutter 29 in the light blocking direction based on the drive parameter for controlling the shutter set by the main control unit 71 (for example, FSHU OPEN → FSHU CLOSE).

Subsequently, the control management unit 72 determines whether or not the driving of the shutter is completed (Step S107). More specifically, the control management unit 72 determines whether or not the driving completion signal of the incident-light source shutter 29 transmitted from the actuator controller 73 is received. When the control management unit 72 determines that the driving of the shutter is not completed (No in Step S107), the shutter/filter-wheel controller 7 stands by until the driving completion signal is received. On the contrary, when the control management unit 72 determines that the driving of the shutter is completed (Yes in Step S107), the shutter/filter-wheel controller 7 proceeds to Step S108.

Next, the main control unit 71 transmits the drive parameters for controlling the filter wheel and the shutter from the RAM 74 and the ROM 75 to the actuator controller 73 to set the drive parameter (Step S108).

Subsequently, the control management unit 72 allows the actuator controller 73 to output the start signal so as to drive each filter wheel (Step S109). More specifically, as illustrated in FIG. 5, after a shutter settling time T3 elapses, the actuator controller 73 outputs driving instruction signals for the stepping motor drivers 79b, 79c, and 79e so as to drive the ND filter wheel 30, the excitation light source filter wheel 31, and the observation absorption filter wheel 33 based on the drive parameters of the filter wheel set by the main control unit 71. In this case, deviation may occur until each filter wheel starts driving (for example, refer to a time T4).

Next, the control management unit 72 determines whether or not the driving of each filter wheel is completed (Step S110). More specifically, the control management unit 72 determines whether or not the driving completion signal of each filter wheel transmitted from the actuator controller 73 is received. When the control management unit 72 determines that the driving of each filter wheel is not completed (No in Step S110), the shutter/filter-wheel controller 7 stands by until the driving completion signal is received from each filter wheel. On the contrary, when the control management unit 72 determines that the driving completion signal is received from each filter wheel (Yes in Step S110), the shutter/filter-wheel controller 7 proceeds to Step S111.

Subsequently, the control management unit 72 determines whether or not the counting of the shutter standby time is ended (Step S111). More specifically, as illustrated in FIG. 5, the control management unit 72 determines whether or not the counting of the shutter standby time T2 is ended. When the control management unit 72 determines that the counting of the shutter standby time T2 is not ended (No in Step S111), the shutter/filter-wheel controller 7 stands by until the counting of the shutter standby time T2 is ended. On the contrary, when the control management unit 72 determines that the counting of the shutter standby time T2 is ended (Yes in Step S111), the shutter/filter-wheel controller 7 proceeds to Step S112.

Next, the control management unit 72 allows the actuator controller 73 to output the start signal so as to drive the shutter (Step S112). More specifically, as illustrated in FIG. 5, under the control of the control management unit 72, the actuator controller 73 outputs the start signal for starting operations to the stepping motor driver 79a to drive the incident-light source shutter 29 in the opening (exposing) direction (for example, FSHU CLOSE → FSHU OPEN).

Subsequently, the control management unit 72 determines whether or not the driving of the shutter is completed (Step S113). When the control management unit 72 determines that the driving of the shutter is not completed (No in Step S113), the shutter/filter-wheel controller 7 stands by until the driving completion signal is received. On the contrary, when the control management unit 72 determines that the driving of the shutter is completed (Yes in Step S113), the shutter/filter-wheel controller 7 proceeds to Step S114.

Next, the control management unit 72 starts counting the shutter settling time T3 (Step S114) and outputs the random trigger through the external signal output unit 77 to the camera controller 5 (Step S115). More specifically, as illustrated in FIG. 5, the control management unit 72 starts counting the shutter settling time T3 of the incident-light source shutter 29 and switches the random trigger from "trigger negate" to "trigger assert" to output the random trigger to the camera controller 5. Accordingly, the video camera 4 can continuously image the sample specimen S at a specified time interval.

Subsequently, the control management unit 72 determines whether or not the counting of the shutter settling time T3 is ended (Step S116). When the control management unit 72 determines that the counting of the shutter settling time T3 is not ended (No in Step S116), the shutter/filter-wheel controller 7 stands by until the counting of the shutter settling time T3 is ended. On the contrary, when the control management unit 72 determines that the counting of the shutter settling time T3 is ended (Yes in Step S116), the shutter/filter-wheel controller 7 proceeds to Step S117.

Next, the control management unit 72 determines whether or not the counting of the random trigger output time T5 is ended (Step S117). When the control management unit 72 determines that the counting of the random trigger output time T5 is not ended (No in Step S117), the shutter/filter-wheel controller 7 stands by until the counting of the random trigger output time T5 is ended. On the contrary, when the control management unit 72 determines that the counting of the random trigger output time T5 is ended (Yes in Step S117), the shutter/filterwheel controller 7 proceeds to Step S118.

Subsequently, the control management unit 72 outputs the start signal to the actuator controller 73 so as to drive the shutter (Step S118). More specifically, as illustrated in FIG. 5, the actuator controller 73 outputs the start signal to the stepping motor driver 79a so as to drive the incident-light source shutter 29 in the light blocking direction (for example, FSHU OPEN → FSHU CLOSE).

Steps S119, S120, and S121 correspond to above-described Steps S113, S114, and S116, respectively. After Step S121, the shutter/filter-wheel controller 7 ends the processes.

According to the embodiment of the present invention described above, the control management unit 72 controls the actuator controller 73 to output the start signal for allowing the power driver 79 to start operations to the power driver 79 and controls the actuator controller 73 to stop outputting the start signal to the designated power driver 79 and the other power drivers 79 until passage of the settling time during which the driving of the actuator in response to the operation of the power driver 79 is ended and then the driving thereof is enabled again. Therefore, it is possible to drive a plurality of the actuators at appropriate timing without deterioration in high-speed performance of the actuators. As a result, it is possible to illuminate the sample specimen S with an illumination light beam in a user's desired order.

In addition, according to the embodiment of the present invention, when a shutter standby time for allowing the video camera 4 to start imaging which is included in the control command output through the microscope controller 3 from the host system 12 and a driving completion time in which the driving of all the actuators is completed elapse, the control management unit 72 outputs the random trigger through the external signal output unit 77 to the camera controller 5. Therefore, without deterioration in high-speed performance of each actuator, it possible to perform imaging (time-lapse) of the sample specimen S at a user's desired time interval. As a result, in the case of combining the images of the sample specimen S imaged by using the filters (for example, red, blue, and green filters), it is possible to reproduce the image of the sample specimen S with good accuracy.

In addition, according to the embodiment of the present invention, when fluorescence observation is performed by a biomicroscope apparatus, it is possible to prevent unnecessary exposure such as damage to a sample specimen S (cell) due to discoloration or phototoxicity of fluorescence dye.

Furthermore, according to the embodiment of the present invention, since a user does not need to take into consideration a control pattern by estimating a software process and communication time between the host system 12 and each actuator, it is possible to simply and easily produce the operation sequence.

### Modified Example 1

In the embodiment described above, when the shutter/filter-wheel controller 7 receives the external apparatus trigger, only one step of the sequence operation is performed. However, plural steps may be performed. In this case, the main control unit 71 may record the plural steps for the drive parameters and the drive timing of the shutter and the filter wheel in the RAM 74 and the ROM 75 based on the control command input through the external communication I/F unit 76 and the microscope controller 3 from the host system 12. Therefore, when the control management unit 72 receives the external apparatus trigger, the shutters and the filter wheels for different steps may be performed with different driving.

### Modified Example 2

In addition, in the embodiment described above, when the control management unit 72 receives the external apparatus trigger input through the external signal input unit 78 from the drive start signal generation apparatus 11, one step of the sequence operations of the shutter and the filter wheel is performed. However, for example, when the control management unit 72 receives the external apparatus trigger once, plural steps of the sequence operations of the shutter and the filter wheel may be performed.

### Modified Example 3

In addition, in the embodiment described above, attention is drawn to the shutter in order to explain the settling time in which the driving of the actuator is ended and then the driving thereof is enabled again. However, the settling time may be applied to the filter wheel.

### Modified Example 4

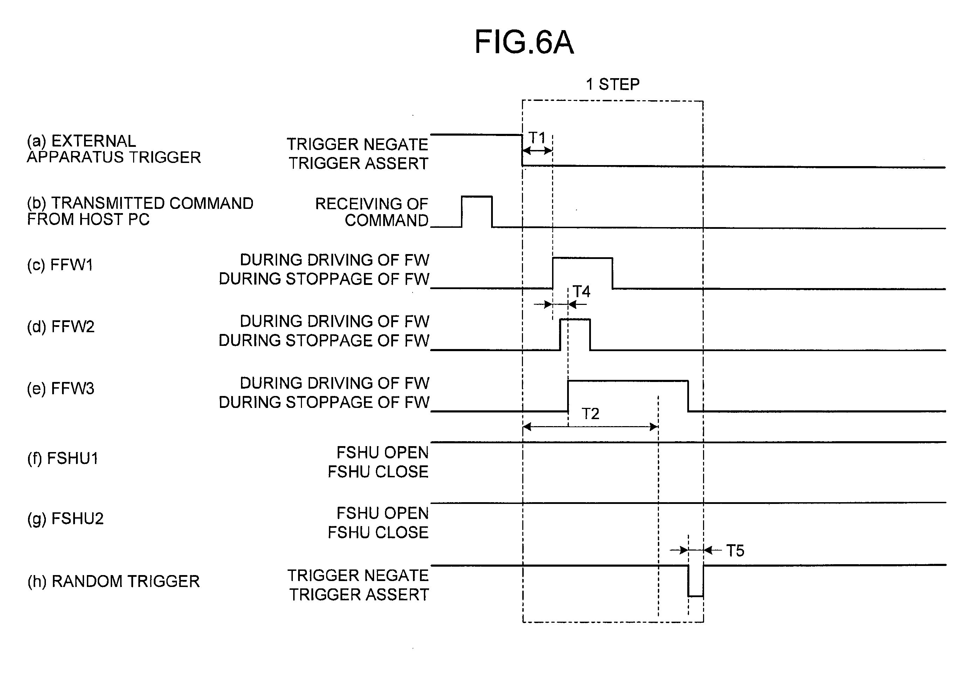

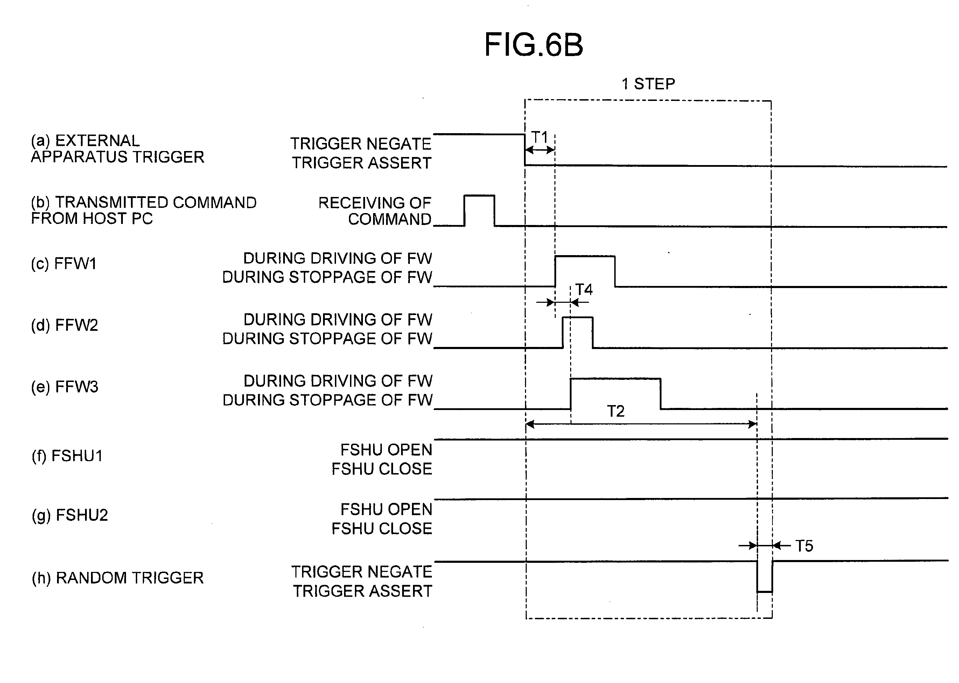

In addition, in the embodiment described above, the discoloration preventing operations (Steps S105, S106, and S107 in FIG. 4) of allowing the control management unit 72 to switch the incident-light source shutter 29 from the opened state to the blocked state are described. However, the present invention can be adapted in the state where the incident-light source shutter 29 is always opened. FIG. 6A is a timing chart illustrating operations of components under the control of the shutter/filter-wheel controller 7 of the microscope system 1 according to Modified Example 4 of an embodiment of the present invention. FIG. 6B is a timing chart illustrating operations of components under the control of the shutter/filter-wheel controller 7 of the microscope system 1 according to Modified Example 4 of an embodiment of the present invention.

As illustrated in FIG. 6A, when the control management unit 72 receives the external apparatus trigger in the state where the incident-light source shutter 29 is opened, when the shutter standby time T2 of the shutter precedes the driving completion timing of the observation absorption filter wheel 33, the control management unit 72 outputs the random trigger through the external signal output unit 77 to the camera controller 5 in accordance with the driving completion timing of the observation absorption filter wheel 33. Next, after the shutter settling time T3 of the shutter elapses, the control management unit 72 ends the processes irrespective of the state of the incident-light source shutter 29. Next, the control management unit 72 determines whether or not the counting of the random trigger output time T5 is ended. When the control management unit 72 determines that the counting of the random trigger output time T5 is not ended, the shutter/filter-wheel controller 7 stands by until the counting of the random trigger output time T5 is ended. On the contrary, when the control management unit 72 determines that the counting of the random trigger output time T5 is ended, the processes are terminated.

On the other hand, as illustrated in FIG. 6B, when the shutter standby time T2 of the shutter lags behind the driving completion timing of the observation absorption filter wheel 33, the control management unit 72 outputs the random trigger through the external signal output unit 77 to the camera controller 5 in accordance with shutter standby time T2 of the shutter. Next, the control management unit 72 determines whether or not the counting of the random trigger output time T5 is ended. When the control management unit 72 determines that the counting of the random trigger output time T5 is not ended, the shutter/filter-wheel controller 7 stands by until the counting of the random trigger output time T5 is ended. On the contrary, when the control management unit 72 determines that the counting of the random trigger output time T5 is ended, the processes are terminated.

According to Modified Example 4 of the embodiment of the present invention described above, it is possible to obtain the same effects as those of the embodiment described above.

In addition, according to Modified Example 4 of the embodiment of the present invention, since the drivers can be operated and image signal of the video camera 4 can be transmitted without a change in electric wire configuration, inconvenience of turning off the power of the apparatus according to the use purpose of the functions can be removed.

### Modified Example 5

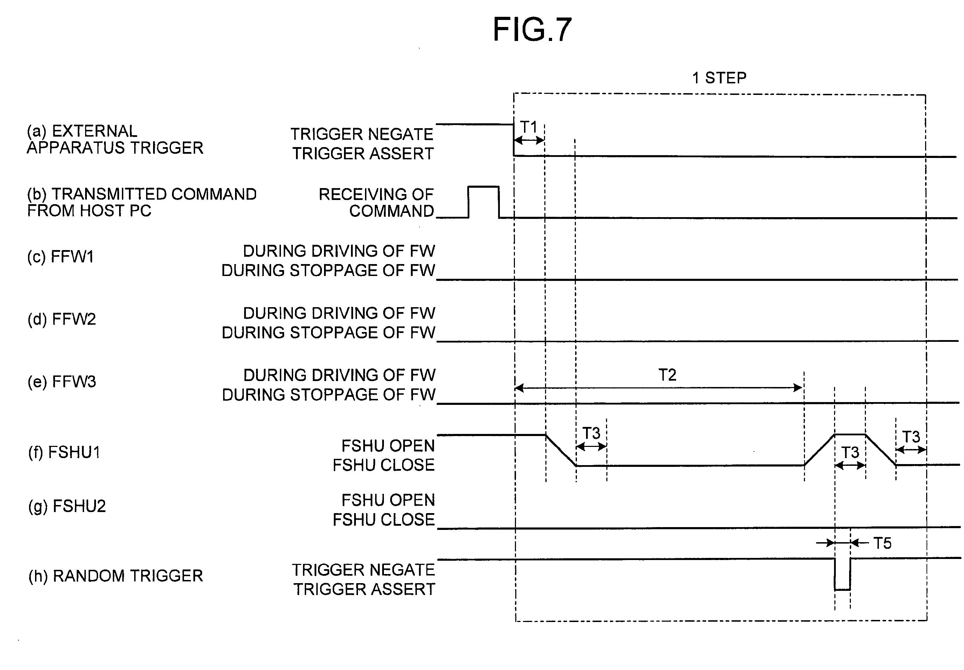

FIG. 7 is a timing chart illustrating operations of components under the control of the shutter/filter-wheel controller 7 of the microscope system 1 according to Modified Example 5 of the embodiment of the present invention.

As illustrated in FIG. 7, when the control management unit 72 receives the external apparatus trigger in the state where the incident-light source shutter 29 is opened, when each filter wheel is not driven, after the counting of the shutter standby time T2 of the shutter is ended, the control management unit 72 performs opening/closing operations of the incident-light source shutter 29.

According to Modified Example 5 of the embodiment of the present invention described above, it is possible to obtain the same effects as those of the embodiment described above.

In addition, according to Modified Example 5 of the embodiment of the present invention, even in the case of a low-price microscope system and an inexpensive camera, imaging with high accuracy of time can be performed without preparation of special apparatuses.

### Modified Example 6

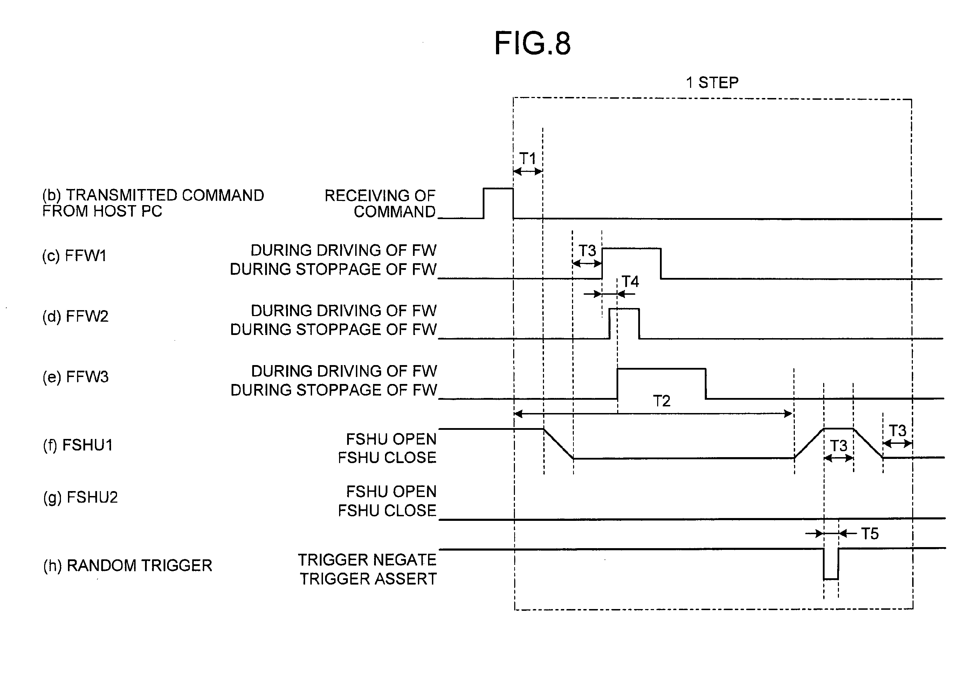

FIG. 8 is a timing chart illustrating operations of components under the control of the shutter/filter-wheel controller 7 of the microscope system 1 according to Modified Example 6 of the embodiment of the present invention.

As illustrated in FIG. 8, the control management unit allows the components of the microscope system 1 to start driving based on the control command of starting the sequence operations, which is input through the external communication I/F unit 76 and the microscope controller 3 from the host system 12, without reception of an external apparatus trigger transmitted through the external signal input unit 78 from the drive start signal generation apparatus 11.

According to Modified Example 6 of the embodiment of the present invention described above, it is possible to obtain the same effects as those of the embodiment described above.

In addition, according to Modified Example 6 of the embodiment of the present invention, since the plural actuators are enabled to perform sequence operations by one command from the host system, in comparison with the case where each actuator is allowed to perform sequence operations by plural commands, it is possible to exclude a process speed of the host system 12 (PC) or an indefinite time of communication or the like between the host system 12 and the apparatus.

### Modified Example 7

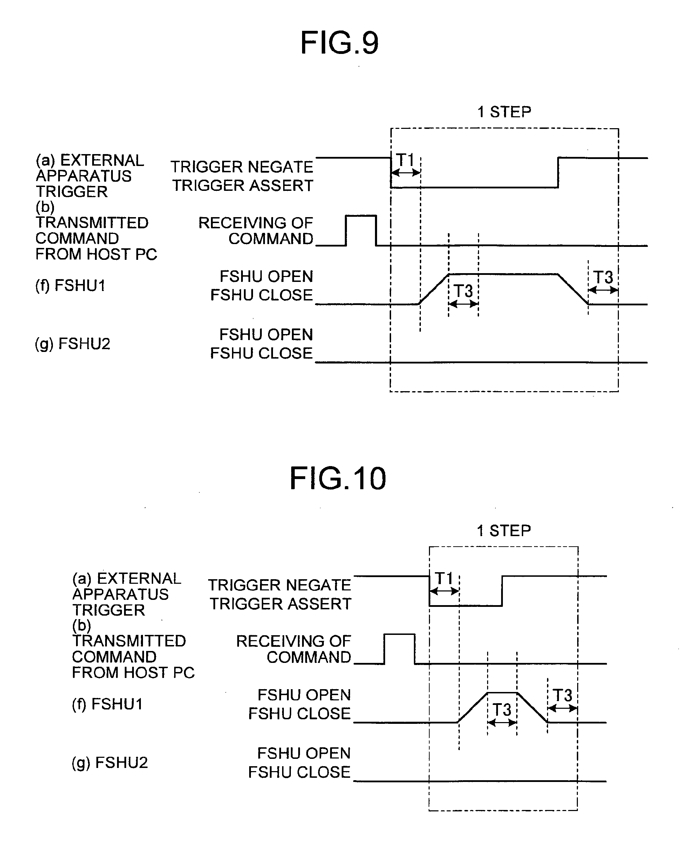

FIG. 9 is a timing chart illustrating operations of components under the control of the shutter/filter-wheel controller 7 of the microscope system 1 according to Modified Example 7 of the embodiment of the present invention.

As illustrated in FIG. 9, when the control management unit 72 receives the external apparatus trigger, the control management unit 72 allows the components of the microscope system 1 to start driving based on the control command input through the external communication I/F unit 76 and the microscope controller 3 from the host system 12. In this case, the control management unit 72 drives the incident-light source shutter 29 and the transmitted-light source shutter 32 according to the external apparatus trigger. More specifically, when the external apparatus trigger is asserted, the control management unit 72 opens the incident-light source shutter 29; and when the external apparatus trigger is negated, the control management unit 72 blocks the incident-light source shutter 29.

According to Modified Example 7 of the embodiment of the present invention described above, even in the case of a low-price microscope system and an inexpensive camera, imaging with high accuracy of time can be performed without preparation of special apparatuses.

### Modified Example 8

FIG. 10 is a timing chart illustrating operations of components under the control of the shutter/filter-wheel controller 7 of the microscope system 1 according to Modified Example 8 of the embodiment of the present invention.

As illustrated in FIG. 10, when the control management unit 72 receives the external apparatus trigger, the control management unit 72 allows the components of the microscope system 1 to start driving based on the control command of starting the sequence operations input through the external communication I/F unit 76 and the microscope controller 3 from the host system 12. In this case, when the external apparatus trigger is asserted, the control management unit 72 opens the incident-light source shutter 29. After that, even when the external apparatus trigger is negated, the control management unit 72 drives the incident-light source shutter 29 after the shutter settling time T3 elapses.

According to Modified Example 8 of the embodiment of the present invention described above, even in the case of a low-price microscope system and an inexpensive camera, imaging with high accuracy of time can be performed without preparation of special apparatuses.

In addition, in the embodiment described above, the stepping motor drivers 79a to 79e are used as the power driver 79. However, for example, various kinds of drivers, actuators, and the like used for the microscope system 1 such as a linear motor driver and a piezoelectric element driver may be employed.

In addition, in the embodiment described above, the number of stepping motor drivers is five. However, the number of stepping motor drivers may be appropriately changed according to a configuration of the microscope system 1.

In addition, in the embodiment described above, the number of shutter/filter-wheel controllers 7 is one. However, two or more shutter/filter-wheel controllers 7 may be installed according to a configuration of the microscope system 1.

In addition, in the embodiment described above, an example of the microscope system configured to include the microscope apparatus, the video camera, the display unit, and the host system is described. However, the present invention may be adapted to, for example, an imaging apparatus such as a video microscope, which is configured to include an objective lens that magnifies the sample specimen, an imaging function of imaging the sample specimen through the objective lens, and a display function of displaying the image.

In addition, in the embodiment described above, an upright microscope apparatus is exemplified as the microscope apparatus. However, the present invention may be adapted to an inverted microscope apparatus. In addition, the present invention may be adapted to various kinds of systems called line apparatuses with which the microscope apparatus is combined.

In addition, in the embodiment described above, the electrically-driven stage is configured to be movable in the Z direction by the motor. However, the objective lens or the whole observation optical system including the objective lens may be configured to be movable in the Z direction.

In addition, in the embodiment described above, the case where the operation completion of the observation absorption filter wheel 33 is latest is described. However, the present invention may be adapted to, for example, an example where the operation completion of the excitation light source filter wheel 31 is latest.

Additional advantages and modifications will readily occur to those skilled in the art. Therefore, the invention in its broader aspects is not limited to the specific details and representative embodiments shown and described herein.

## Claims

1. A microscope system (1) comprising:
a plurality of actuators (29, 30, 31, 32, 33) configured to cause components of a microscope (2) to operate;
a plurality of power drivers (79a to 79e) configured to drive the plurality of actuators (29, 30, 31, 32, 33), respectively;
an actuator controller (73) configured to control the plurality of actuators (29, 30, 31, 32, 33) through the plurality of power drivers (79a to 79e); and
a control management unit (72) configured to control the actuator controller (73) to designate any one of the plurality of power drivers (79a to 79e) to output a start signal for allowing the designated power driver to start operation to the designated power driver, and to control the actuator controller (73) to stop outputting of the start signal to the designated power driver and the other power drivers other than the designated power driver until passage of a settling time in which driving of one of the plurality of actuators (29, 30, 31, 32, 33) in response to the operation of the designated power driver is completed and then enabled again.

2. The microscope system (1) according to claim 1,
wherein the control management unit (72) is configured to divide any of the plurality of actuators (29, 30, 31, 32, 33) into a plurality of groups to manage the groups as actuator groups,
the control management unit (72) is configured to transmit the start signal to two or more of the plurality of power drivers (79a to 79e) corresponding to a designated one of the actuator groups, and
until passage of the settling time of an actuator of which the driving is completed last in the designated actuator group, the control management unit (72) is configured to stop outputting of the start signal to another actuator group other than the designated actuator group.

3. The microscope system (1) according to claim 1 or 2, further comprising an external apparatus (4) configured to perform a specified operation,
wherein when a standby time until the driving of a specified actuator of the plurality of actuators is started and the settling time in which the driving of the plurality of actuators is entirely completed elapse, the control management unit (72) starts driving of the specified actuator, and outputs the apparatus signal to the external apparatus (4) when the driving of the specified actuator is completed.

4. The microscope system (1) according to claim 3,
wherein the external apparatus (4) is an imaging unit (4) configured to image an object to generate image data of the object, and
when the imaging unit (4) receives the apparatus signal, the imaging unit (4) starts imaging the object.

5. The microscope system (1) according to claim 3 or 4, further comprising a signal generation unit (11) configured to output an electrical signal to the control management unit (72) at a specified time interval,
wherein when the control management unit (72) receives the electrical signal, the control management unit (72) starts counting of the standby time and outputs the start signal to the actuator controller (73).

6. The microscope system (1) according to claim 3 or 4,
wherein the control management unit (72) is communicably connected to a host system (12) configured to transmit an operation instruction signal for instructing the operation of the control management unit (72), and
when the control management unit (72) receives the operation instruction signal from the host system (12), the control management unit (72) starts counting of the standby time and outputs the start signal to the actuator controller (73).

7. The microscope system (1) according to any one of claims 1 to 6,
wherein when the actuators (29, 30, 31, 32, 33) are driven, the actuator controller (73) outputs a driving signal indicating that the actuators (29, 30, 31, 32, 33) are being driven, to the control management unit (72).

8. The microscope system (1) according to any one of claims 1 to 7, further comprising a recording unit (74) configured to record a drive parameter including a target moving position of each of the plurality of actuators (29, 30, 31, 32, 33) and driving timing indicating timing of the driving of each of the plurality of actuators (29, 30, 31, 32, 33),
wherein the control management unit (72) outputs the start signal to the actuator controller (73) based on the drive parameter and the driving timing which are recorded by the recording unit (74).

9. The microscope system (1) according to any one of claims 1 to 8,
wherein the plurality of actuators (29, 30, 31, 32, 33) include a filter wheel (30, 31, 33) that rotatably hold a plurality of filters which transmit light having different wavelength ranges or a shutter (29, 32) that blocks light.

10. A method of driving a microscope system (1) that includes a plurality of actuators (29, 30, 31, 32, 33) configured to cause components of a microscope (2) to operate; a plurality of power drivers (79a to 79e) configured to drive the plurality of actuators (29, 30, 31, 32, 33), respectively; and an actuator controller (73) configured to control the plurality of actuators (29, 30, 31, 32, 33) through the plurality of power drivers (79a to 79e), the method comprising:
controlling the actuator controller (73) to designate any one of the plurality of power drivers (79a to 79e) to output a start signal for allowing the designated power driver to start operation to the designated power driver; and
controlling the actuator controller (73) to stop outputting of the start signal to the designated power driver and the other power drivers other than the designated power driver until passage of a settling time in which driving of one of the plurality of actuators (29, 30, 31, 32, 33) in response to the operation of the designated power driver is completed and then enabled again.

11. A program executed by a microscope system (1) that includes a plurality of actuators (29, 30, 31, 32, 33) configured to cause components of a microscope (2) to operate; a plurality of power drivers (79a to 79e) configured to drive the plurality of actuators (29, 30, 31, 32, 33), respectively; and an actuator controller (73) configured to control the plurality of actuators (29, 30, 31, 32, 33) through the plurality of power drivers (79a to 79e), the program causing the microscopic system to execute:
controlling the actuator controller (73) to designate any one of the plurality of power drivers (79a to 79e) to output a start signal for allowing the designated power driver to start operation to the designated power driver; and
controlling the actuator controller (73) to stop outputting of the start signal to the designated power driver and the other power drivers other than the designated power driver until passage of a settling time in which driving of one of the plurality of actuators (29, 30, 31, 32, 33) in response to the operation of the designated power driver is completed and then enabled again.
